(19) Europäisches Patentamt
European Patent Office
Office européen des brevets

(11) **EP 1 279 945 A1**

(12) **DEMANDE DE BREVET EUROPEEN**

(43) Date de publication:
**29.01.2003 Bulletin 2003/05**

(51) Int Cl.⁷: $G01N\ 13/02$, $G01N\ 13/00$

(21) Numéro de dépôt: **01870164.9**

(22) Date de dépôt: **24.07.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **Sopura S.A.**
**6180 Courcelles (BE)**

(72) Inventeurs:
• **Neuwels, Thierry**
**1190 Forest (BE)**

• **Loncin, Paul-Eric**
**1600 Sint-Pieters-Leeuw (BE)**
• **Velings, Nicolas**
**1420 Braine-L'Alleud (BE)**

(74) Mandataire: **Van Malderen, Michel et al**
**Office van Malderen**
**Place Reine Fabiola 6/1**
**1083 Bruxelles (BE)**

(54) **Mesure en continu de la tension superficielle: appareillage, procédé et applications associés**

(57)    La présente invention se rapporte à un appareillage pour le lavage de récipients, en particulier de récipients en verre à l'aide d'une solution comprenant au moins un détergent et un agent ionique minéral fort, et ladite solution étant appliquée auxdits récipients sous forme de bain et/ou de jet (30), ledit appareillage étant muni d'un dispositif (21) de contrôle en continu de la concentration en agent ionique minéral fort et en détergent dans la solution de lavage, ledit dispositif de contrôle comprenant entre autre un dispositif de mesure de la concentration en détergent, ledit deuxième dispositif (23) correspondant à un stalagmomètre (29) pour mesurer la tension superficielle à la surface du liquide de lavage.

La présente invention se rapporte également à un procédé utilisant ledit appareillage, ainsi qu'à l'utilisation dudit appareillage et dudit procédé lors du lavage industriel de récipients en verre pour contrôler in situ en continu la composition d'une solution de lavage contenant au moins de la soude caustique et un agent tensioactif.

FIG. 2

EP 1 279 945 A1

## Description

### Objet de l'invention

La présente invention se rapporte à un nouveau procédé de mesure en continu de la tension superficielle à l'interface gaz-liquide.

Un domaine particulier d'application est l'utilisation dudit procédé pour contrôler *in situ* la concentration de tensioactifs dans le liquide de lavage lors du lavage industriel de bouteilles en verre destinées à contenir des liquides alimentaires tels que de la bière.

### Etat de la technique

Les tensioactifs ou surfactants sont des molécules amphiphiles comprenant une partie polaire et une partie apolaire. La partie polaire peut être ionique (cationique, anionique, amphotérique) ou non-ionique, tandis que la partie apolaire est généralement constituée d'une chaîne aliphatique ou aromatique.

Les tensioactifs ou surfactants peuvent être utilisés dans l'industrie chimique, pharmaceutique ou agro-alimentaire pour différentes applications telles que la formulation de détergents, de désinfectants, de lubrifiants ou d'agents moussants.

Dans le cas particulier du lavage industriel de récipients, notamment de récipients en verre tels que des bouteilles, le lavage est réalisé sur une courte période, soit par immersion dans un bain contenant un liquide de lavage, soit par vaporisation dudit liquide de lavage sur lesdits récipients. On utilise habituellement comme liquide de lavage un bain de soude caustique (NaOH 1 à 2%) dans lequel on ajoute des additifs qui sont des tensioactifs.

En vue d'un lavage efficace, on doit pouvoir déterminer le pouvoir détergent d'un produit de lavage contenant au moins un type de tensioactif, c'est-à-dire sa capacité à détacher les salissures adhérant à un récipient et à les mettre en suspension ou en solution.

En outre, les conditions de lavage doivent être contrôlées avec précision sur le site même, notamment la concentration en soude caustique et celle en tensioactifs.

Si le dosage de la soude caustique dans le bain de lavage est généralement réalisé par conductivité, cette méthode ne convient pas pour apprécier la concentration en tensioactifs.

En théorie, il est possible de procéder à une analyse complète du liquide de lavage en déterminant la COD (demande d'oxygène chimique) (Suess, *Handbook of Analysis for Water Pollution Control,* BD2, Oxford :Pergamon 1980) ou le TOC (carbone oxydable total) (DIN 38409, T.3 (1983), DIN ISO 8245 (1991), *Int. J. Environ.Anal.Chem.* **13**, 19-28 (1982);**20**, 1-12 (1985)), mais cette analyse se révèle être dans les faits d'une grande complexité de mise en oeuvre et ne peut pas être réalisée sur le site de lavage même.

De même, l'analyse chimique du liquide de lavage et la détection des différents types de surfactants qu'il contient par la mesure en hydrocarbones, la méthode BIAS ou la méthode MBAS, nécessitent du temps et le recours à un personnel qualifié. Ce sont donc des analyses relativement chères.

Il a également été proposé de réaliser des mesures de tensiométrie à la surface de liquide en utilisant la capacité propre à tous les tensioactifs de diminuer la tension de surface au niveau d'une interface gaz-liquide de manière à rendre compatibles les différentes phases ou microphases. Des mesures de tension superficielle effectuées sur des solutions contenant des agents chimiques sont en effet largement utilisées industriellement, que ce soit dans l'industrie des semi-conducteurs, dans l'industrie papetière ou pétrolière, dans le domaine des imprimantes à jet d'encre, dans l'industrie chimique de base ou dans l'industrie pharmaceutique.

Néanmoins, dans le cas particulier du lavage industriel de récipients, les techniques classiques de mesure de la tension superficielle telles que la méthode de l'anneau de De Noüy et la méthode du plateau de Wilhelmy (« Measurement of Interfacial Tension and Surface Tension-General Review for Practical Man », C. Weser, in *GIT Faczeitschrift für das Laboratorium*, **24** (1980), pp.642-648 et pp.734-742, GIT Verlag GmbH, Darmstadt) ne présentent qu'un intérêt limité dans la mesure où il s'agit de mesurer avec des méthodes statiques la tension superficielle d'un système dynamique dans lequel la quantité de surface à considérer change rapidement, les molécules de tensioactifs n'ont pas la même vitesse de migration en solution et ne saturent donc pas toutes les surfaces avec le même taux.

Il est généralement admis que la mesure de la tension superficielle à l'aide d'un stalagmomètre, dont le principe consiste à déterminer le poids ou le volume d'une goutte de liquide à tester à l'extrémité d'un capillaire, est une méthode dynamique inappropriée pour contrôler la concentration en tensioactif lors du processus de lavage industriel, la mesure ne correspondant pas à proprement parlé une grandeur physique, puisque l'âge de la surface varie avec la valeur de la tension superficielle, c'est-à-dire que l'on travaille dans des conditions dynamiques variables.

En revanche, la méthode du «maximum bubble pressure » (W.J. Moore, Physical Chemistry, 3rd Ed., p.729-731, Prentice Hall, N.J., 1962) est une méthode qui a été proposée pour mesurer de façon dynamique la tension superficielle. Dans cette méthode, on fait passer un gaz au travers de l'orifice d'un tube dans un liquide test de façon à former une série de bulles. La pression de gonflement à l'intérieur de chaque bulle atteint une valeur maximum quand la bulle atteint son rayon de courbure minimum, c'est-à-dire lorsqu'elle adopte une forme hémisphérique au niveau de l'orifice. Malheureusement, la mise en oeuvre de cette méthode coûte très cher. En outre, cette méthode présente l'inconvénient de nécessiter un ré-étalonnage fréquent du capillaire qui est par ailleurs fragilisé par la composition du milieu de détergence dans lequel il est immergé.

## Buts de l'invention

La présente invention vise à fournir une méthode et un dispositif pour mesurer *in situ* et en continu la tension superficielle à l'interface gaz-liquide, au niveau d'une solution de lavage.

La présente invention vise en particulier à fournir une méthode et un dispositif qui soient fiables, faciles à mettre en oeuvre et dont le coût soit compétitif par rapport à celui des méthodes et dispositifs de mesure de la tension superficielle actuellement disponibles.

## Résumé de l'invention

La présente invention se rapporte à un appareillage pour le lavage de récipients, en particulier de récipients en verre, à l'aide d'une solution comprenant au moins un détergent et un agent ionique minéral fort, et appliquée auxdits récipients sous forme de bain et/ou de jet, ledit appareillage étant muni d'un dispositif de contrôle en continu de la concentration en agent ionique minéral fort et de la concentration en détergent dans la solution de lavage, ledit dispositif de contrôle comprenant :

- un premier dispositif de mesure de la concentration ) en agent ionique minéral fort (premier dispositif de dosage);
- un deuxième dispositif de mesure de la concentration en détergent (deuxième dispositif de dosage), ledit deuxième dispositif correspondant à un stalagmomètre pour mesurer la tension superficielle à la surface du liquide de lavage, le premier dispositif de mesure et le deuxième dispositif de mesure étant capables de fonctionner indépendamment l'un de l'autre ;
- un réservoir contenant l'agent ionique minéral fort;
- un réservoir contenant le détergent ;
- au moins une première pompe d'alimentation en connexion d'une part avec le bain ou le jet de lavage et d'autre part avec le réservoir contenant l'agent ionique minéral fort;
- au moins une deuxième pompe d'alimentation en connexion d'une part avec le bain ou le jet de lavage et d'autre part avec le réservoir contenant le détergent ;
- un système automatique de traitement et de commande auquel la première pompe et la deuxième pompe d'alimentation sont asservies, pour analyser les mesures effectuées à l'aide du premier et du deuxième dispositifs de mesure et pour commander automatiquement si nécessaire auxdites pompes, sur base de ces mesures, l'addition, dans le bain et/ou dans le jet, de détergent et/ou d'agent ionique minéral fort.

De préférence, le deuxième dispositif de mesure correspondant à un stalagmomètre comprend:

- une chambre capable de recevoir le liquide de lavage ou de l'eau,
- une circulation d'air pour éviter la mise sous pression de la chambre,
- un capillaire couplé à une cellule de détection infrarouge et qui communique avec la chambre,
- une sonde de température pour mesurer la température à l'intérieur de la chambre,
- des moyens destinés à maintenir constante la pression hydrostatique sur le capillaire,
- des moyens de collecte et de récupération destinés à collecter et récupérer le liquide (eau ou liquide de lavage) à la sortie du capillaire;
- des moyens automatiques d'enregistrement et de traitement des données associés à la cellule de détection infra-rouge.

De préférence, le détergent est choisi parmi le groupe constitué par les additifs détergents aux agents ioniques minéraux forts, les détergents neutres à faiblement alcalins et un mélange de ceux-ci.

De préférence, l'agent ionique minéral fort est choisi parmi le groupe constitué par la soude caustique, la potasse caustique et les acides minéraux.

De préférence, les récipients sont des récipients en verre, des récipients en acier inoxydable ou d'autres récipients aptes, de par leur composition chimique et physique, à contenir des produits agro-alimentaires, c'est-à-dire des récipients fiables d'un point de vue de la sécurité alimentaire.

La présente invention se rapporte également à un procédé de lavage industriel de récipients, en particulier de récipients en verre, à l'aide d'une solution de lavage comprenant un agent ionique minéral fort et au moins un détergent, dans lequel on effectue un contrôle continu de la concentration en agent ionique minéral fort et en détergent au niveau de la solution de lavage à l'aide de l'appareillage décrit ci-dessus.

De préférence, le contrôle continu de la concentration en agent ionique minéral fort et en détergent au niveau de la solution de lavage comprend les étapes suivantes :

- on mesure séparément à l'aide du premier et du deuxième dispositifs de mesure, de façon continue, d'une part la concentration en agent ionique minéral fort et d'autre part la concentration en détergent, la mesure de la concentration en détergent étant basée sur la mesure en continu de la tension superficielle à la surface du liquide de lavage ;
- les données relatives à ces mesures sont ensuite transmises à un système automatique de traitement et de commande qui les compare aux valeurs de concentration souhaitées ;
- ledit système commande si besoin aux pompes d'alimentation en agent ionique minéral fort et en détergent qui y sont asservies l'addition dans le liquide de lavage de détergent et/ou d'agent ionique minéral fort, de façon à réajuster automatiquement leur concentration dans le liquide de lavage aux valeurs de concentration souhaitées.

De préférence, la mesure en continu de la concentration en agent ionique minéral fort à l'aide du premier dispositif de mesure comprend la mesure en continu de la conductivité du liquide de lavage.

De préférence, la mesure de la tension superficielle à la surface du liquide de lavage à l'aide du stalagmomètre (deuxième dispositif de dosage) comprend les étapes suivantes :

- on remplit la chambre de liquide de lavage jusqu'à une hauteur précise, de manière à ce que le liquide diffuse en partie dans le capillaire (11) ;
- tout en s'assurant que la pression hydrostatique sur le capillaire et la température à l'intérieur de la chambre sont constants, on mesure au cours du temps à l'aide de la cellule de détection infrarouge la fréquence de formation d'une goutte de liquide de lavage à la sortie du capillaire, chaque goutte de liquide étant récupérée à l'aide des moyens de collecte et de récupération;
- on enregistre les données correspondant à ces mesures à l'aide du système automatique de traitement et de commande, de façon à obtenir une première série de données;
- on recommence les mêmes étapes que ci-dessus en remplaçant le liquide de lavage par de l'eau, de façon à obtenir une deuxième série de données correspondant à des données de référence ;
- on calcule automatiquement la tension superficielle à la surface du liquide de lavage à partir de la première série de données et de la deuxième série de données à l'aide du système de traitement automatique des données et de commande.

Le maintien de la pression hydrostatique sur le capillaire est avantageusement réalisé en remplissant la chambre de liquide jusqu'à une hauteur précise et en couplant ladite chambre à des moyens de débordement destinés à maintenir constante la hauteur de liquide dans ladite chambre.

La présente invention se rapporte également à l'utilisation de l'appareillage ou du procédé selon la présente invention pour le lavage de récipients en verre, à l'aide d'une solution comprenant de la soude caustique et au moins un agent tensioactif, la concentration en agent tensioactif étant comprise entre 20 et 1000 ppm.

Une application particulièrement intéressante est le lavage de récipients en verre, tels que des bouteilles, destinés à l'industrie agro-alimentaire.

## Définitions

On entend par " tension superficielle " ou " tension de surface " la force intermoléculaire attractive assurant la cohésion des molécules de surface. Cette force a pour effet de rendre minimum l'aire de surface. Numériquement, elle s'exprime en mN/m et correspond donc à une force par unité delongueur.

On entend par " âge d'une surface " le temps entre le moment de la création d'une nouvelle surface air/liquide et le moment de la mesure de la tension superficielle.

On entend par " mesure dynamique de la tension superficielle " une mesure de la tension superficielle qui est effectuée pour un âge de la surface compris entre 10 et 1000 millisecondes, par opposition à une mesure statique qui est une mesure à l'équilibre (âge de la surface infini).

On entend par « mesure en continu » ou « en ligne » de la tension superficielle, un suivi au cours du temps de l'évolution de la tension superficielle dynamique à un âge de surface donné.

On entend par « mesure in situ » une mesure qui est réalisée sur le liquide détergent provenant directement du bain de lavage.

On entend par « concentration micellaire critique » la concentration en tensioactif à partir de laquelle le tensioactif forme des micelles.

## Brève description des figures

La figure 1 représente un schéma d'un dispositif de contrôle selon l'invention destiné à contrôler en continu, in situ, la composition d'un liquide de lavage.

La figure 2 représente une forme préférée d'exécution d'un dispositif pour mettre en oeuvre le procédé de mesure en continu de la tension superficielle à la surface d'un liquide selon la présente invention.

La figure 3 compare l'évolution de la tension superficielle d'une solution de soude caustique 1% contenant du MIX 100 BNA en fonction de la concentration en MIX 100 BNA, telle que mesurée d'une part par le procédé selon l'invention et d'autre part la méthode de l'anneau de De Noüy.

La figure 4 montre conjointement l'évolution de la tension superficielle d'une solution de soude caustique 1% contenant du MIX 100 BNA en fonction du logarithme de la concentration en MIX 100 BNA, telle que déterminée par le procédé selon l'invention et telle que déterminée selon la méthode de l'anneau de De Noüy.

La figure 5 montre, pour une solution de soude caustique 1% contenant du MIX 100 BNA, l'évolution de la fréquence des gouttes en fonction de la concentration en MIX 100 BNA, telle qu'elle est mesurée à la sortie du capillaire avec le dispositif de la présente invention

## Description d'une forme d'exécution préférée de l'invention

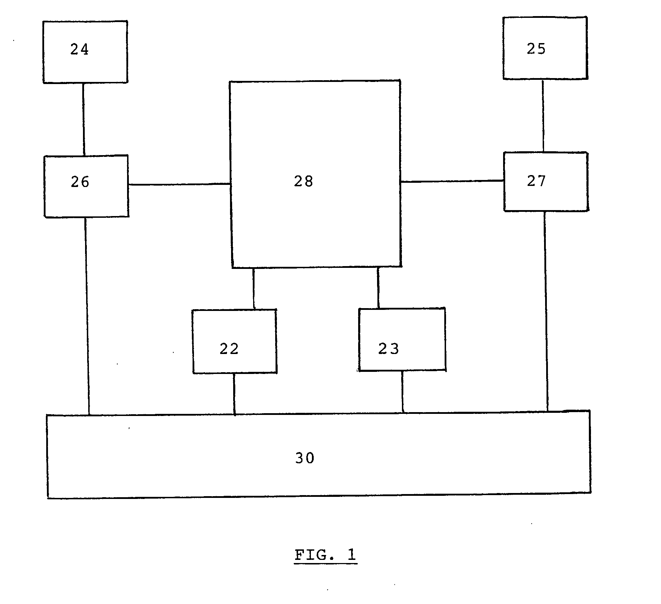

Une forme préférée d'exécution du dispositif de contrôle de la composition d'un liquide de lavage selon la présente invention est représenté à la figure 1. Dans cet exemple, le liquide de lavage à tester comprend de la soude caustique et un agent tensioactif. L'homme de métier pourra aisément adapter cet exemple à d'autres applications, notamment à des applications dans lesquelles l'acide ionique minéral fort n'est pas la soude caustique, ou dans lesquelles le liquide de lavage contient plusieurs types de détergents.

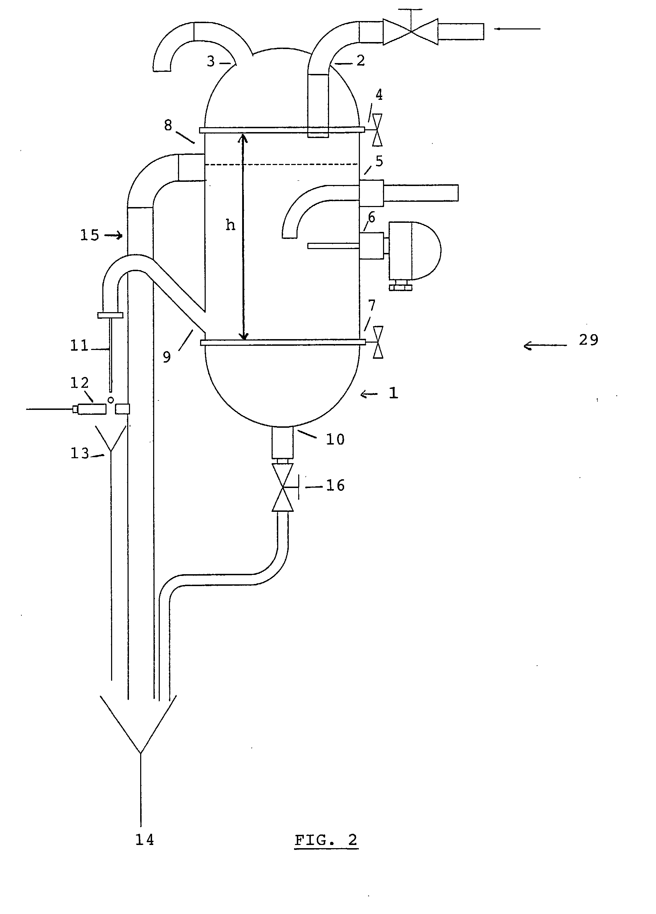

Le dispositif de contrôle 21 comprend ici un dispositif 23 de dosage en détergent et un dispositif 22 de dosage en soude caustique. Le dispositif 23 de dosage en détergent correspond à un stalagmomètre 29 tel qu'illustré à la figure 2 et permet de mesurer la tension superficielle au niveau du liquide de lavage contenu dans un bain 30, tandis que le dispositif 22 de dosage en soude caustique est un dispositif classique permettant de mesurer la conductivité dudit liquide de lavage.

Les dispositifs de dosage 22, 23 sont reliés au bain de lavage 30 et à un dispositif 28 de traitement des données et de commande.

Le dispositif 21 de contrôle selon l'invention comprend également deux réservoirs 24, 25, contenant respectivement la soude caustique et le tensioactif, ainsi que deux pompes d'alimentation 26, 27.

La pompe 26 est connectée au réservoir 24, au bain de lavage 30, et au dispositif de traitement et de commande 28. La pompe 27 est connectée au réservoir 25, au bain de lavage 30, et au dispositif de traitement et de commande 28.

Le dispositif de contrôle 21 fonctionne de la façon suivante. Les dispositifs 22 et 23 mesurent respectivement la conductivité et la tension superficielle au niveau du bain 30. Les données correspondant à ces mesures sont transmises au système de traitement et de commande 28. Ce système 28 compare ces données aux valeurs de concentration souhaitées en détergent et en soude caustique et commande, s'il y a un écart entre les valeurs théoriques et les valeurs mesurées, un réajustement des concentrations dans le bain 30 aux valeurs théoriques, par l'addition de détergent et/ou de soude caustique *via* la pompe d'alimentation 27 et/ou la pompe d'alimentation 26.

Comme illustré à la figure 2, le dispositif de dosage 23 destiné à mettre en oeuvre le procédé de mesure en continu de la tension superficielle à la surface du liquide de lavage, selon la présente invention, comprend les principaux éléments d'un stalagmomètre 29.

Plus précisément, ledit dispositif 23, 29 comprend une chambre 1 qui prend ici la forme d'une cuve en inox avec des orifices d'entrée 2 à 7 et des orifices de sortie 8, 9 et 10.

L'orifice 5 permet l'entrée de la solution ou liquide de lavage à tester dans la chambre 1, tandis que l'orifice 2 permet l'entrée d'eau fraîche pour le nettoyage et la calibration.

Le volume de liquide (liquide de lavage ou eau distillée) à l'intérieur de la chambre 1 est contrôlé et maintenu constant.

L'orifice 3 permet la circulation d'air à l'intérieur de la chambre 1 afin d'éviter sa mise sous pression.

La chambre 1 est connectée *via* son orifice de sortie 9 à un capillaire 11 à la sortie duquel se trouvent des moyens de collecte 13 destinés à récupérer les liquides sortant du capillaire 11, lesdits moyens de collecte 13 débouchant sur des moyens d'évacuation 14. Entre le capillaire 11 et les moyens de collecte 13 est disposée une cellule de détection infrarouge 12.

La capillaire 11 est un capillaire à bout plat du type aiguille de chromatographie ou baxter.

L'orifice 8 de la chambre 1 est relié à une canalisation 15, ledit orifice 8 et ladite canalisation 15 constituant des moyens destinés à maintenir constant le volume de liquide à l'intérieur de la chambre 1, et ce par débordement du trop-plein de liquide selon le principe des vases communicants, le trop-plein de liquide étant évacué par les moyens d'évacuation 14.

L'orifice 6 permet de connecter la chambre 1 à une sonde de température destiné à contrôler la température à l'intérieur de la chambre 1.

Les orifices 4 et 7 sont des raccords tri clamp qui, lorsqu'ils sont ouverts permettent un accès aisé et rapide à l'intérieur de la chambre 1.

La chambre 1 est connectée via son orifice 10 à une vanne de purge pour dépôt 16 qui est elle-même connectée aux moyens d'évacuation 14.

Concrètement, la mesure de la tension superficielle du liquide à tester, et donc la concentration en tensioactifs dans ledit liquide, est réalisée de la façon suivante.

On réalise d'abord une première mesure sur le liquide de lavage à tester. Pour cela, la chambre 1 est remplie de liquide de lavage jusqu'à une hauteur h via l'orifice 2. On ouvre alors l'orifice 8, ce qui a pour effet de faire circuler le liquide de lavage qui diffuse alors en partie via l'orifice 9 dans le capillaire 11 puis sort goutte à goutte du capillaire 11 pour aller dans les moyens de collecte 13 et être finalement évacué par les moyens d'évacuation 14.

A la sortie du capillaire 11, la cellule de détection infrarouge 12 compte automatiquement la fréquence de formation d'une goutte. Une goutte de liquide de lavage tombe du capillaire 11 quand son poids est égal à la force due à la tension superficielle.

Pour une température constante, une hauteur h de liquide à l'intérieur de la chambre 1 constante et une viscosité de liquide constante, la fréquence $\nu$ de formation d'une goutte de liquide de lavage est inversement proportionnelle à la tension superficielle.

Les données relatives à cette première mesure sont enregistrées automatiquement et digitalisées par un système automatiquement de traitement et de commande (non représenté).

On réalise ensuite une seconde série de mesures selon le même principe que celui mentionné ci-dessus, mais cette fois en remplissant la chambre 1 avec de l'eau distillée à 20°C. On mesure ainsi une fréquence de formation $\nu$'d'une goutte d'eau.

Les données relatives à l'eau sont elles aussi enregistrées et digitalisées. Elles serviront de données « standard » ou de référence et seront comparées à celles obtenues pour le liquide de lavage.

L'eau distillée ayant à 20°C une tension superficielle connue de 72 mN/m, la tension superficielle du liquide à tester, et donc la concentration en tensioactifs qu'elle contient peuvent être calculées selon la formule suivante :

$$\text{tension superficielle (mN/m)} = (\nu/\nu') \times 72$$

En effet, on rappellera pour comprendre que le principe de la mesure statique de la tension superficielle à l'aide d'un stalagmomètre classique est le suivant. Une goutte tombe du capillaire quand son poids est égal à la force due à la tension superficielle, ce qui se traduit selon l'équation (1) :

$$mg = \gamma \pi d \qquad (1)$$

avec

    m est la masse de la goutte (kg)
    g est l'attraction universelle (m/s$^2$)
    $\gamma$ est tension superficielle (Nm/m)
    d est le diamètre du capillaire (m)

On compte le nombre de gouttes obtenu avec un volume d'eau pure comme référence, choisi arbitrairement. On répète la mesure en remplaçant le volume d'eau par le liquide à tester. En principe, étant donné que le liquide à tester est un liquide de lavage qui a une tension superficielle inférieure à celle de l'eau, les gouttes de liquide à tester tomberont plus vite par rapport à l'eau, c'est-à-dire pour un volume plus petit et un poids plus faible.

Si on considère que n est le nombre de gouttes du liquide à tester et n' le nombre de gouttes pour l'eau distillée dont la tension superficielle est égale à 72 Nm/m à 20°C, il est possible de calculer la tension superficielle ou tension de surface, comme suit :
la masse d'une goutte de liquide étant

$$m = (\nu\rho)/n \qquad (2)$$

avec $\nu$ : le volume de la chambre (m$^3$)
$\rho$ : la masse volumique du liquide à tester ;
et en posant que la constante k est égale à :

$$k = (\nu g)/(\pi d) \qquad (3)$$

alors le rapport des tensions de surface du liquide à tester et de l'eau peut s'écrire :

$$\gamma/\gamma' = (k\rho n')/(k\rho'n) \qquad (4)$$

En faisant l'hypothèse (i) que la référence est de l'eau pure et que $\gamma$'= 72Nm/m à 20°C, et (ii) que la masse volumique de l'eau et celle du liquide à tester sont similaires, ce qui est le cas pour une solution de lavage classique, on peut écrire d'après l'équation (4) que la tension superficielle du liquide de lavage est :

$$\gamma \text{ (Nm/m)} = 72 (n'/n) \qquad (5)$$

En d'autres termes, la tension superficielle du liquide de lavage est calculée directement en faisant le rapport entre le nombre de gouttes obtenu pour l'eau et celui obtenu pour ledit liquide de lavage, ce rapport étant multiplié par 72.

Le principe de la mesure en continu de la tension superficielle selon l'invention dérive de la relation établie ci-dessus pour la mesure statique. Cependant, la mesure en continu s'appuie non plus sur la mesure du nombre de gouttes à la sortie du capillaire, mais sur la mesure de la fréquence de formation desdites gouttes.

Plus précisément, l'équation (2) peut encore s'écrire :

$$m = V\rho \quad (2')$$

où V est le volume d'une goutte.

Si la pression hydrostatique sur le capillaire (h constante) et la viscosité du liquide sont constantes; le débit D à la sortie du capillaire est constant:

$$D = \text{débit} = V/t = \text{constante} \qquad (6)$$

Sachant que la fréquence

$$\nu = 1/t \qquad (7)$$

On a donc:

$$D = V.\nu = \text{constante} \qquad (8)$$

$$V = (D/\nu) \qquad (9)$$

$$(D/v).\rho = \gamma\pi d \qquad (10)$$

$$\gamma=(1/v). (D\rho/\pi d) \qquad (11)$$

Si la masse volumique ρ d'une goutte et le diamètre du capillaire sont constants, alors la tension de surface s'écrit

$$\gamma= \kappa/v \text{ avec K} = D\rho/\pi d \qquad (12)$$

$$\gamma=(v'/v). \gamma' \qquad (13)$$

Si la référence est de l'eau, la tension superficielle du liquide à tester s'écrit :

$$\gamma = (v'/v).72 \text{ Nm/m} \qquad (15)$$

Il est donc possible de calculer la tension de surface de la solution de lavage directement à partir de la fréquence des gouttes d'eau et celle des gouttes de ladite solution de lavage.

Un tel dispositif de mesure dynamique de la tension superficielle peut être utilisé lors d'un procédé industriel de lavage de récipients pour asservir, à l'aide d'un système de traitement et de commande automatique, une ou plusieurs pompes de débit contenant des tensioactifs. Ainsi, en fonction de la concentration réelle en tensioactifs dans le liquide de lavage qui sera mesurée par le dispositif de mesure de la présente invention et de la concentration souhaitée, le système de traitement et de commande automatique permettra si besoin de réajuster la concentration en tensioactif dans le liquide de lavage en commandant automatiquement à la pompe l'addition d'une certaine quantité de tensioactif. Aucune intervention humaine n'est requise pour cela.

Il est également possible d'envisager de coupler le contrôle de la concentration en tensioactifs dans le liquide de lavage à un contrôle de la concentration en soude caustique dans ledit liquide en utilisant les méthodes et dispositifs déjà connus de l'état de la technique, tels que ceux mesurant la conductivité du liquide.

Le contrôle automatique de la quantité de soude caustique et de tensioactifs dans le liquide de lavage grâce à des pompes spécifiques, asservies au dispositif de mesure et au système de traitement et de commande automatique, garantit de façon fiable la qualité du lavage. A tout instant du procédé de lavage, le procédé permet de s'assurer simultanément que la quantité de soude caustique et de tensioactifs dans le liquide de lavage sont suffisantes pour un lavage efficace.

Un autre avantage dudit procédé est que l'on peut réduire le nombre de chargements de bain et d'étapes de régénération et la consommation en liquide de lavage est calculée au mieux. En d'autres termes les conditions de lavage sont optimisées, ce qui permet de réaliser des économies en temps et en argent par rapport aux techniques déjà connues.

**Exemple :**

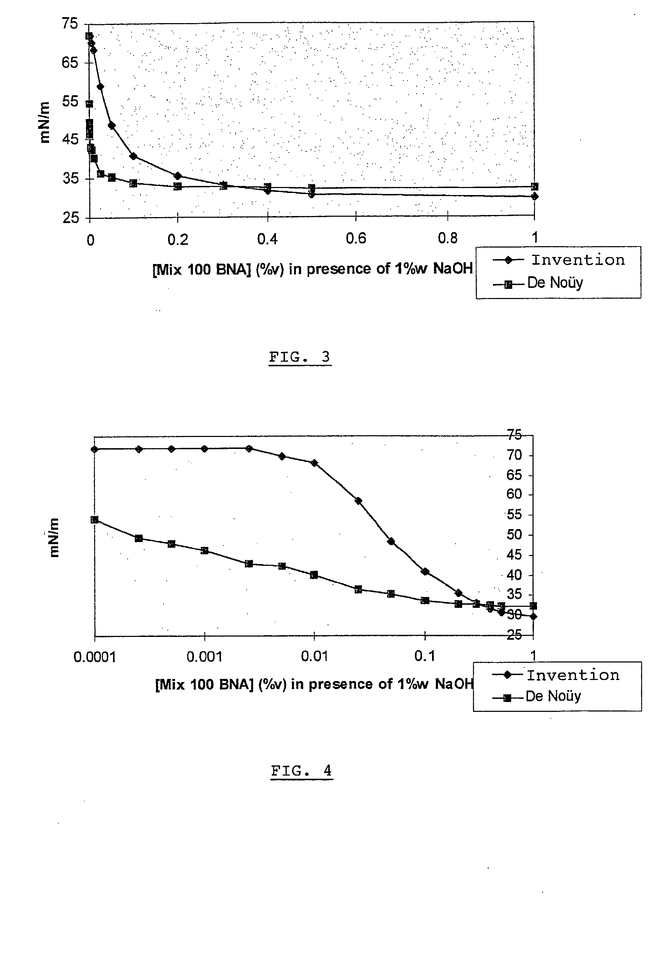

La figure 3 compare l'évolution de la tension superficielle d'une solution en fonction de la concentration en tensioactif dans cette solution, telle que mesurée d'une part par le procédé selon l'invention et d'autre part la méthode de l'anneau de De Noüy. La solution est une solution de soude caustique 1% contenant du MIX 100 BNA, tensioactif commercialisé par la société Sopura S. A., Belgique.

Pour le lavage industriel de bouteilles en verre, l'additif MIX 100 BNA est généralement utilisé à des concentrations autour de 0.1 à 0.2% v/v c'est-à-dire à des concentrations supérieures à la concentration micellaire critique (CMC).

La figure 3 montre, de façon surprenante, qu'au delà de la CMC, la tension superficielle mesurée selon le procédé de la présente invention varie avec la concentration en MIX 100 BNA, alors que, comparativement, dans les mêmes conditions, la tension superficielle mesurée selon la méthode de l'anneau de De Noüy ne varie pas avec la concentration en MIX 100 BNA.

En d'autres termes, dans des conditions de détergence (concentration en tensioactif supérieure à la concentration micellaire critique), la méthode utilisant le stalagmomètre selon la présente invention est une méthode sensible pour déterminer, à partir de la mesure de la tension superficielle, les variations dans le temps de la concentration en tensioactif de la solution.

La figure 4 montre conjointement l'évolution de la tension superficielle d'une solution de soude caustique 1% contenant du MIX 100 BNA en fonction du logarithme de la concentration en MIX 100 BNA, telle que mesurée par le procédé selon l'invention et telle que mesurée selon la méthode de l'anneau de De Noüy.

De façon tout à fait surprenante, on peut constater sur cette figure que la tension superficielle varie de façon linéaire avec le logarithme de la concentration en tensioactif MIX 100 BNA dans la solution, pour une concentration en MIX 100 BNA variant entre 0.05% et 0.5% v/v, c'est-à-dire pour une concentration en agent tensioactif non ionique entre 20 et 1000 ppm.

En d'autres termes, les résultats montrent de façon tout à fait surprenante que l'erreur due au changement de l'âge de la surface avec la tension superficielle est négligeable dans une gamme de concentration en agent tensioactif allant d'environ 20 ppm à environ 1000 ppm, c'est-à-dire y compris pour des concentrations en agent tensioactif largement supérieures à la concentration micellaire critique (qui est généralement comprise entre 10 et 50 ppm).

Par ailleurs, la concentration de la solution a été parallèlement déterminée après prélèvement et analyse complète de la solution selon les techniques classiques de titration, analyses HPLC... et comparée aux résultats obtenus par le procédé de la présente invention. Il a ainsi été démontré qu'il existait une corrélation entre la concentration telle que déterminée par l'analyse complète de la solution et celle telle que déterminée par le procédé de la présente invention.

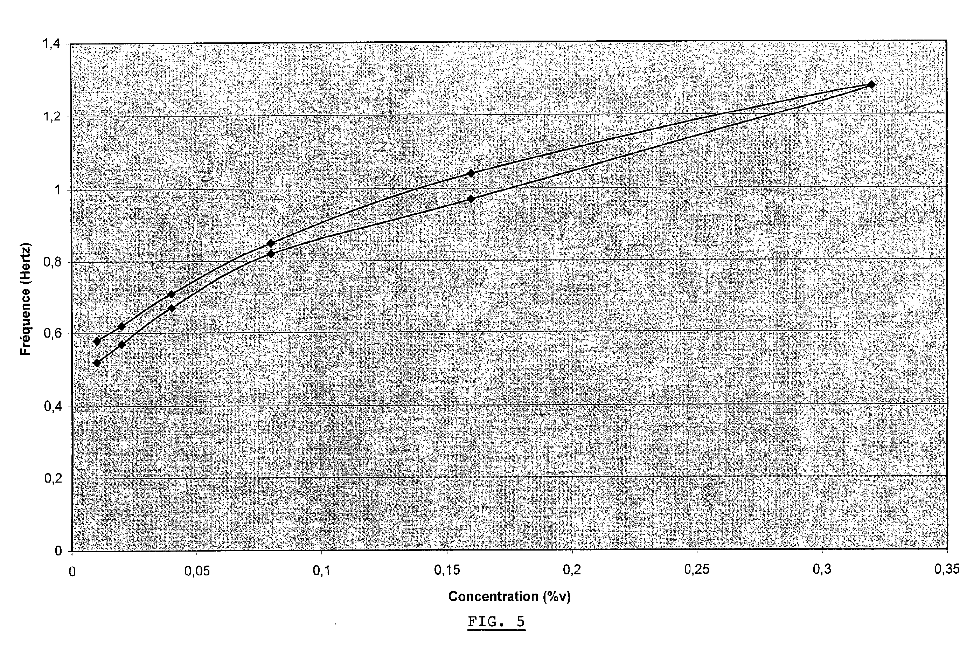

La figure 5 atteste de la reproductibilité du procédé selon l'invention en donnant les mesures de fréquence des gouttes enregistrées à la sortie du capillaire en fonction de la concentration en tensioactif (MIX 100 BNA).

En conclusion , grâce à la méthode de mesure de la tension superficielle selon la présente invention, il est possible, dans les conditions de détergence, de suivre automatiquement les variations de la concentration en tensioactif en suivant les variations de la tension superficielle. La méthode selon la présente invention peut donc être utilisée pour suivre l'évolution de la concentration en tensioactif dans la solution de lavage.

Le procédé selon la présente invention et l'appareillage qui lui est associé offre donc de nouvelles perspectives, en particulier en ce qui concerne la maîtrise du risque de contamination alimentaire et la recherche de nouveaux tensioactifs.

## Revendications

1. Appareillage pour le lavage de récipients, en particulier de récipients en verre à l'aide d'une solution comprenant au moins un détergent et un agent ionique minéral fort, et appliquée auxdits récipients sous forme de bain et/ou de jet (30), ledit appareillage étant muni d'un dispositif (21) de contrôle en continu de la concentration en agent ionique minéral fort et en détergent dans la solution de lavage, ledit dispositif de contrôle comprenant :

   - un premier dispositif (22) de mesure de la concentration en agent ionique minéral fort;
   - un deuxième dispositif (23) de mesure de la concentration en détergent, ledit deuxième dispositif (23) correspondant à un stalagmomètre (29) pour mesurer la tension superficielle à la surface du liquide de lavage, le premier dispositif de mesure et le deuxième dispositif de mesure étant capables de fonctionner indépendamment l'un de l'autre ;
   - un réservoir (24) contenant l'agent ionique minéral fort;
   - un réservoir (25) contenant le détergent ;
   - au moins une première pompe d'alimentation (26) en connexion d'une part avec le bain ou le jet de lavage (30) et d'autre part avec le réservoir (24) contenant l'agent ionique minéral fort;
   - au moins une deuxième pompe d'alimentation (27) en connexion d'une part avec le bain ou le jet de lavage (30) et d'autre part avec le réservoir (25) contenant le détergent ;
   - un système automatique de traitement et de commande (28) auquel la première pompe (26) et la deuxième pompe (27) d'alimentation sont asservies, pour analyser les mesures effectuées à l'aide du premier et du deuxième dispositifs de mesure (22, 23) et pour commander automatiquement si nécessaire auxdites pompes (26, 27), sur base de ces mesures, l'addition, dans le bain et/ou dans le jet (30), de détergent et/ou d'agent ionique minéral fort prélevés dans les réservoirs correspondants (25, 24).

2. Appareillage selon la revendication 1, dans lequel le deuxième dispositif de mesure (23) correspondant à un stalagmomètre (29) comprend:

   - une chambre (1) capable de recevoir le liquide de lavage ou de l'eau,
   - une circulation d'air pour éviter la mise sous pression de la chambre (1),
   - un capillaire (11) couplé à une cellule de détection infrarouge (12) et qui communique avec la chambre (1),
   - une sonde de température (6) pour mesurer la température à l'intérieur de la chambre (1),
   - des moyens (8,15) destinés à maintenir constante la pression hydrostatique sur le capillaire (11),
   - des moyens de collecte et de récupération (13,14) destinés à collecter et récupérer le liquide (eau ou liquide de lavage) à la sortie du capillaire (11);
   - des moyens automatiques d'enregistrement et de traitement des données (28) associés à la cellule de détection infra-rouge (12).

3. Appareillage selon la revendication 1 ou 2, **caractérisé en ce que** le détergent est choisi parmi le groupe constitué par les additifs détergents aux agents ioniques minéraux forts, les détergents neutres à faiblement alcalin et un mélange de ceux-ci.

4. Appareillage selon la revendication 1 ou 2, **caractérisé en ce que** l'agent ionique minéral fort est choisi parmi le groupe constitué par la soude caustique, la potasse caustique et les acides minéraux.

5. Appareillage selon la revendication 1 ou 2, **caractérisé en ce que** les récipients sont des récipients en verre, des récipients en acier inoxydable ou d'autres récipients aptes de par leur composition chimique à recevoir des produits agro-alimentaires.

6. Procédé de lavage industriel de récipients, en particulier de récipients en verre, à l'aide d'une solution de lavage comprenant au moins un agent ionique minéral fort et un détergent, dans lequel on effectue un contrôle continu de la concentration en agent ionique minéral fort et en détergent au niveau de la solution de lavage à l'aide de l'appareillage selon l'une des revendications 1 à 5.

7. Procédé selon la revendication 6, dans lequel le contrôle continu de la concentration en agent ionique minéral fort et en détergent au niveau de la solution de lavage comprend les étapes suivantes :

- on mesure séparément à l'aide du premier et du deuxième dispositifs (22, 23) de mesure de façon continue d'une part la concentration en agent ionique minéral fort et d'autre part la concentration en détergent, la mesure de la concentration en détergent utilisant la mesure en continu de la tension superficielle à la surface du liquide de lavage ;
- les données relatives à ces mesures sont ensuite transmises à un système automatique de traitement et de commande (28) qui les compare aux valeurs de concentration souhaitées ;
- ledit système (28) commande si besoin aux pompes d'alimentation en agent ionique minéral fort et en détergent (26,27) qui y sont asservies l'addition dans le liquide de lavage de détergent et/ou d'agent ionique minéral fort, de façon à réajuster automatiquement leur concentration dans le liquide de lavage aux valeurs de concentration souhaitées.

8. Procédé selon la revendication 7, **caractérisé en ce que** la mesure en continu de la concentration en agent ionique minéral fort à l'aide du premier dispositif de mesure comprend la mesure en continu de la conductivité du liquide de lavage.

9. Procédé selon la revendication 6 à 8, **caractérisé en ce que** la mesure de la tension superficielle à la surface du liquide de lavage à l'aide du stalagmomètre (29) comprend les étapes suivantes :

- on remplit la chambre (1) de liquide de lavage jusqu'à une hauteur précise (h), de manière à ce que le liquide diffuse en partie dans le capillaire (11) ;
- tout en s'assurant que la quantité de liquide de lavage à l'intérieur de la chambre (1) est constante de manière à exercer sur le capillaire (11) une pression hydrostatique constante, et en s'assurant par ailleurs que la température à l'intérieur de la chambre est constante, on mesure à l'aide de la cellule de détection infrarouge (12) la fréquence de formation d'une goutte de liquide de lavage à la sortie du capillaire (11), chaque goutte de liquide étant récupérée à l'aide des moyens de collecte et de récupération (13,14) ;
- on enregistre les données correspondant à ces mesures à l'aide du système automatique de traitement et de commande, de façon à obtenir une première série de données;
- on recommence les mêmes étapes que ci-dessus en remplaçant le liquide de lavage par de l'eau, de façon à obtenir une deuxième série de données correspondant à des données de référence ;
- on calcule automatiquement la tension superficielle à la surface du liquide de lavage à partir de la première série de données et de la deuxième série de données à l'aide du système de traitement automatique des données et de commande (28).

10. Utilisation de l'appareillage selon l'une des revendications 1 à 5 ou du procédé selon l'une des revendications 6 à 9, pour le lavage de récipients en verre, à l'aide d'une solution comprenant de la soude caustique, de préférence à une concentration comprise entre 1 et 2%, et au moins un agent tensioactif, la concentration en agent tensioactif étant comprise entre 20 et 1000 ppm.

FIG. 1

FIG. 2

FIG. 3

FIG. 4

FIG. 5

EP 1 279 945 A1

Office européen
des brevets

**RAPPORT DE RECHERCHE EUROPEENNE**

Numéro de la demande

EP 01 87 0164

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 92 18680 A (HENKEL KGAA) 29 octobre 1992 (1992-10-29) * page 2, dernier alinéa – page 3, alinéa 2 * * page 4, alinéa 4 – page 5, alinéa 2 * * page 12, ligne 1 – page 12, ligne 12; revendications 1,2,7,8,10 * | 1,2,6,7, 9 | G01N13/02 G01N13/00 |
| A | US 4 361 032 A (LESSNIG WERNER ET AL) 30 novembre 1982 (1982-11-30) * colonne 4, ligne 29 – colonne 5, ligne 23; revendication 1 * | 1,2,6,7 | |
| A | DE 31 25 864 A (BAYER AG) 20 janvier 1983 (1983-01-20) * page 7, ligne 8 – page 9, ligne 8; figure 1 * | 1,2,6,7 | |
| A | DE 21 04 885 A (TELDEC TELEFUNKEN DECCA) 24 août 1972 (1972-08-24) * page 2, dernier alinéa – page 3, alinéa 2; figure 2 * | 1,2,6,7 | |

**DOMAINES TECHNIQUES RECHERCHES (Int.Cl.7)**

G01N
B01L

Le présent rapport a été établi pour toutes les revendications

| Lieu de la recherche | Date d'achèvement de la recherche | Examinateur |
|---|---|---|
| MUNICH | 23 janvier 2002 | Weaver, M |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**

EP 01 87 0164

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

23-01-2002

| Document brevet cité au rapport de recherche | | Date de publication | Membre(s) de la famille de brevet(s) | | Date de publication |
|---|---|---|---|---|---|
| WO 9218680 | A | 29-10-1992 | DE | 4112417 A1 | 22-10-1992 |
| | | | AT | 158032 T | 15-09-1997 |
| | | | CA | 2108679 A1 | 17-10-1992 |
| | | | DE | 59208897 D1 | 16-10-1997 |
| | | | DK | 580643 T3 | 27-04-1998 |
| | | | WO | 9218680 A1 | 29-10-1992 |
| | | | EP | 0580643 A1 | 02-02-1994 |
| | | | ES | 2106175 T3 | 01-11-1997 |
| | | | GR | 3025102 T3 | 30-01-1998 |
| | | | JP | 6506609 T | 28-07-1994 |
| | | | US | 5404606 A | 11-04-1995 |
| US 4361032 | A | 30-11-1982 | DE | 2937476 A1 | 02-04-1981 |
| | | | DE | 3062048 D1 | 24-03-1983 |
| | | | EP | 0025921 A1 | 01-04-1981 |
| DE 3125864 | A | 20-01-1983 | DE | 3125864 A1 | 20-01-1983 |
| DE 2104885 | A | 24-08-1972 | DE | 2104885 A1 | 24-08-1972 |

EPO FORM P0460

Pour tout renseignement concernant cette annexe : voir Journal Officiel de l'Office européen des brevets, No. 12/82